# EUROPÄISCHE PATENTSCHRIFT

(11) **EP 0 588 221 B1**
(45) Veröffentlichungstag und Bekanntmachung des Hinweises auf die Patenterteilung: **09.07.1997**
(21) Anmeldenummer: 93114376.2
(22) Anmeldetag: 08.09.1993
(51) Int. Cl.: F16L 27/08

(54) **Druckdichte Verbindungsvorrichtung für Druckmedium führende Leitungen**
Pressure-tight connecting device for pipes conveying a fluid under pressure
Dispositif d'accouplement étanche à la pression pour tuyaux transportant un fluide sous pression

(30) Priorität: 14.09.1992 CH 2886/92
(43) Veröffentlichungstag der Anmeldung: 23.03.1994
(73) Patentinhaber: Weil, Hans Andreas, CH-8001 Zürich (CH)
(72) Erfinder: Weil, Hans Andreas, CH-8001 Zürich (CH)
(74) Vertreter: Petschner, Goetz

(56) Entgegenhaltungen:
- EP-A- 0 432 013
- FR-A- 1 183 872
- US-A- 5 067 753

## Beschreibung

Die vorliegende Erfindung betrifft eine druckdichte Verbindungsvorrichtung mit zwei, ein Druckmedium führenden, relativ zueinander drehenden Leitungen und mindestens einem Rotationskörper, der sich zwischen den Leitungen befindet und der über, sphärische Flächenbereiche und tangential berührende Gegenflächen mit den Leitungen in drehendem und dichtendem Reibungskontakt steht.

Durch die US-PS 5 067 753 ist eine sogenannte Drehdurchführung der vorgenannten Art bekannt geworden, bei welcher die feststehende Leitung mit der Längsaxe X einen drehfesten, axial verschiebbaren hülsenförmigen Kolben mit halbkugelförmigem Kopf und die drehende Leitung mit der Längsaxe Z einen Endbereich mit ebenfalls halbkugelförmigem Kopf umfassen, zwischen welchen ein drehendes Kernstück eingesetzt ist mit zwei gegenüberliegenden konkav-konischen Lagerflächen für ein im wesentlichen sigkeitsdichtes Zusammenwirken mit den Kugelköpfen. Hierbei ist der Endbereich der drehenden Leitung mit seiner Längsaxe Y parallel versetzt zu den Axen X und Z der Leitungen angeordnet, wobei das drehende Kernstück den Versatz der Kugelköpfe ausgleicht.

Eine solche Drehdurchführung gestattet nur eine axiale Anordnung und ist zudem durch die gegebene Exzentrizität kompliziert im Aufbau und demgemäss sehr teuer.

Es ist nun Aufgabe der vorliegenden Erfindung, eine druckdichte Verbindungsvorrichtung der vorgenannten Art zu schaffen, welche sowohl eine Bauweise mit axialem Durchfluss des Mediums und dem damit verbundenen Vorteil geringer radialer Baugrösse als auch eine Bauweise mit radialer Umlenkung des Durchflusses des Mediums und dem damit verbundenen Vorteil einer möglichen Durchdringung der als Welle wirksamen Leitung zur Uebertragung von Funktionssignalen gestattet und sich zudem durch einfachste Bauweise, grösstem Durchlass und kleinste durchmesser auszeichnet.

Dies wird erfindungsgemäss dadurch erreicht, dass der Rotationskörper eine Hülse mit sphärischer, vorzugsweise äquatorialer kugelzonenförmiger Mantelfläche ist und sich mit dieser Mantelfläche zwischen tangential berührenden konischen Ringflächen an den Leitungen abstützt, wobei mindestens ein, an der Hülse wirksamer Gleitnocken die Hülse in eine Schräglage zwingt.

Hierbei kann es vorteilhaft sein, wenn die konischen Ringflächen an den Leitungen durch Innenschultern axial begrenzt sind, an welcher einen Innenschulter sich der Gleitnocken befindet, der die Hülse bis zum Anschlag an die andere Innenschulter in die Schräglage zwingt oder wenn der Gleitnocken an einem äquatorialen Gleitring an der Hülse wirksam ist und die Hülse bis zum stirnseitigen Anschlag des Gleitringes in eine Schräglage zwingt.

Bei einer bevorzugten Ausgestaltung einer Drehdurchführung in axialer Bauweise ist es dann zweckmässig, wenn die eine, die Rotationshülse abstützende konische Ringfläche stirnseitig an der feststehenden Leitung ausgebildet ist und sich die andere konische Ringfläche am freien Ende einer, auf der wellenförmigen Leitung axial gegen die Wirkung einer Feder verschiebbar, drehfest und dichtend aufsitzenden Druckhülse befindet.

Hierbei kann dann eine Ausgestaltung darin bestehen, dass sich der Gleitnocken an der Innenschulter der Druckhülse befindet.

Ferner ist es zweckmässig, wenn der Gleitdurchmesser zwischen Druckhülse und Leitung im wesentlichen gleich ist dem Berührungskreis zwischen konischen Ringflächen und sphärischer Mantelfläche der Rotationshülse.

Ferner kann eine weitere Ausgestaltung so sein, dass die drehende Leitung axial über ein Wälzlager oder über ein hydrostatisches Axiallager abgestützt ist.

Für einen radialen Durchlass des Mediums kann dann die erfindungsgemässe Ausgestaltung so sein, dass in koaxialer Zwillingsanordnung für einen radialen Durchlass des Mediums die drehende wellenförmige Leitung einen Druckraum durchdringt, in dem ein symmetrischer, die drehfeste Leitung bildender, stirnseitig konische Ringflächen aufweisender Führungsring die drehende Leitung umgibt, an dessen Ringflächen sich je eine Rotationshülse mit sphärischer Mantelfläche abstützt, die je an der Gegenseite mit einer Druckhülse zusammenwirken, wobei radiale Bohrungen in der Leitung in den Druckraum münden, der über eine radiale Bohrung im Führungsring mit einer Querbohrung im Gehäuse in Strömungsverbindung steht.

Beispielsweise Ausführungsformen des Erfindungsgegenstandes sind nachfolgend anhand der Zeichnung näher erläutert. Es zeigen:
- Fig. 1: in schematischer, schaubildartiger, teilweiser Schnittdarstellung eine druckdichte Drehdurchführung axialer Bauart;
- Fig. 2: in schematischer Schnittdarstellung eine Variante der Anordnung gemäss Fig. 1
- Fig. 3: in schematischer Schnittdarstellung eine Ausführungsvariante der Anordnung gemäss Fig. 1;
- Fig. 4: in schematischer Schnittdarstellung eine weitere Ausführungsvariante der Anordnung gemäss Fig. 1; und
- Fig. 5: in schematischer, schaubildartiger Darstellung, teilweise im Schnitt, eine erfindungsgemässe Drehdurchführung radialer Bauart.

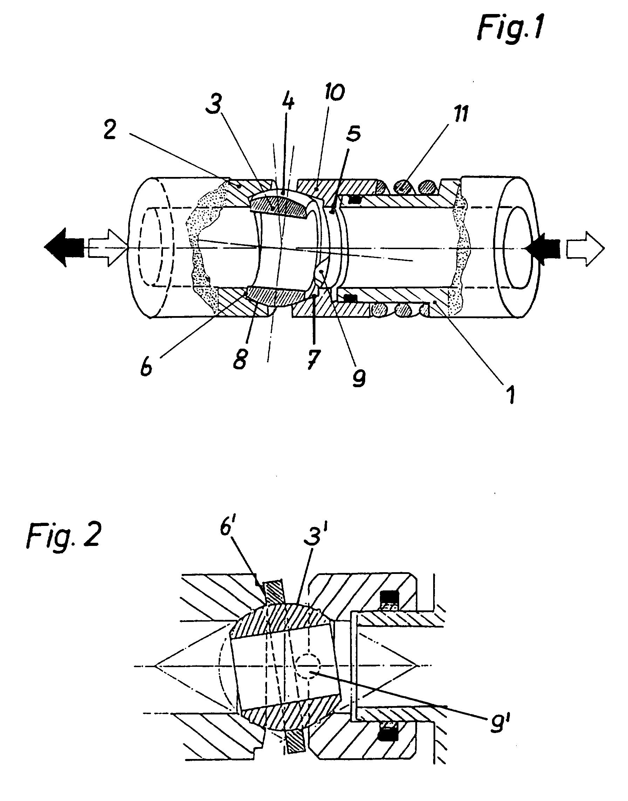

Die druckdichte Verbindungsvorrichtung für die Verbindung zweier, ein Druckmedium führenden, relativ zueinander drehenden Leitungen gemäss Fig. 1 umfasst hier eine wellenförmig drehende Leitung 1 und eine feststehende Leitung 2, wobei hier diese sogenannte Drehdurchführung radialer Bauart ist.

Zwischen diesen Leitungen 1 und 2 befindet sich hier ein Rotationskörper in Form einer Hülse 3 mit einer äquatorialen kugelzonenförmigen Mantelfläche 4, über welche sich die Hülse 4 zwischen tangential berührenden konischen, durch jeweils eine Innenschulter 5 resp. 6 axial begrenzte Ringflächen 7 resp. 8 an den Leitungen 1 und 2 absützt.

Der konische, die eine Ringfläche 8 bildende Einzug ist direkt stirnseitig an der feststehenden Leitung 2 angeordnet, wogegen sich der konische, die andere Ringfläche 7 bildende Einzug am freien Ende einer, auf dem freien Ende der wellenförmigen Leitung 1 axial verschiebbar aufsitzenden Druckhülse 10 befindet.

Diese Druckhülse 10 ist drehfest und dichtend auf der wellenförmigen Leitung 1 angeordnet und steht unter der Wirkung einer Druckfeder 11 derart, dass die Rotationshülse 3 zwischen den sich axial gegenüberliegenden konischen Ringflächen 7 und 8 eingespannt ist.

Bei gleichen Gleitverhältnissen an den Berührungskreisen zwischen der sphärischen Mantelfläche 4 der Rotationshülse 3 und den tangential anliegenden konischen Ringflächen 7 und 8 versucht die Rotationshülse 3 eine mittlere Drehzahl zwischen den beiden Ringflächen 7 und 8 der Leitungen 1 und 2 einzunehmen.

Von erfindungswesentlicher Bedeutung ist ferner die Anordnung eines Gleitnockens 9 an einer der die konischen Ringflächen 7 und 8 axial begrenzenden Innenschultern 5 resp. 6, welcher an einer der Stirnflächen der Rotationshülse 3 angreift und diese in eine Schräglage zwingt, welche sich bei Rotation noch vergrössert, bis die andere Stirnfläche der Rotationshülse 3 zum Anschlag an die andere Innenschulter 6 resp. 5 kommt.

Beim Ausführungsbeispiel gemäss Fig. 1 befindet sich der Gleitnocken 9 an der Innenschulter 5 der Druckhülse 10.

Steigt der Druck des Mediums, so ändern sich die Gleitverhältnisse kaum, wenn der Gleitdurchmesser zwischen Druckhülse 10 und Leitung 1 im wesentlichen gleich ist dem Berührungskreis zwischen konischer Ringfläche 7 resp. 8 und sphärischer Mantelfläche 4 der Rotationshülse 3. Dadurch erfolgt eine hydrostatische Kompensation der Anpresskraft. Die Schräglage der Rotationshülse 4 ist dabei entscheidend für die Betriebssicherheit und die Standzeit der Drehdurchführung, indem diese ein quasi Wischen der Kugeloberfläche der Rotationshülse 4 im Bereich der Berührungskreise mit den beiden konischen Ringflächen 7 und 8 bewirkt, was bei etwaiger metallischer Berührung glättenden Charakter aufweist vergleichsweise bei koaxial ausgerichteten Gleitflächen, wo gegenseitige kleinste Verletzungen fortlaufend zusammenfallen. Besonders bei hoher Drehzahl bildet der Spaltverlauf bei tangentieller Berührung und Wischbewegung einen idealen Flüssigkeitskeil, der auch bei quasi drucklosem Betrieb eine wirkungsvolle Spaltspülung erlaubt.

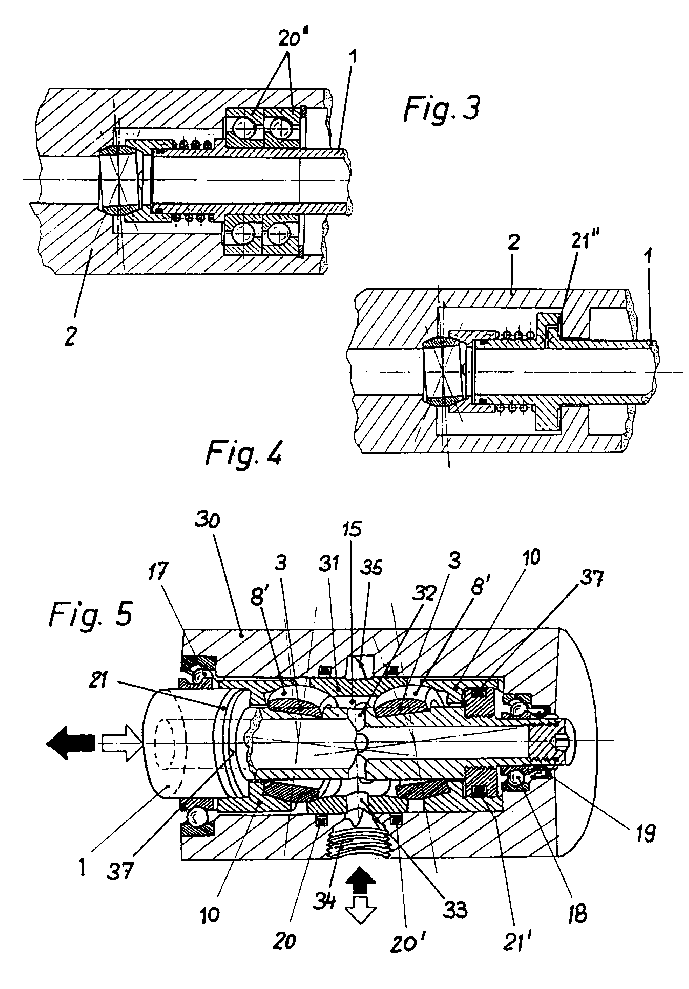

Die radiale Absützung einer solchen vorbeschriebenen Drehdurchführung kann gemäss Fig. 3 mittels Wälzlager 20'' oder, gemäss Fig. 4 mittels hydrostatischem Axiallager 21'' erfolgen.

Bei der Ausführungsvariante gemäss Fig. 2 ist hingegen die Anordnung so, dass der Gleitnocken an einem äquatorialen Gleitring an der Hülse wirksam ist und die Hülse bis zum stirnseitigen Anschlag des Gleitringes in eine Schräglage zwingt.

Fig. 5 zeigt nun eine erfindungsgemässe Drehdurchführung mit radialer Umlenkung des Durchflusses des Mediums. Hierbei ist die drehende wellenförmige Leitung 1 für die axiale Zuführung des Mediums über Lagermittel 17,18 in einem ortsfesten Gehäuse 30 abgestützt, das zusammen mit der Mantelfläche der Leitung 1 einen ringförmigen Druckraum 15 begrenzt, in dem etwa mittig ein symmetrischer Führungsring 31 drehfest und dichtend angeordnet ist, welcher an beiden Stirnflächen konische Ringflächen 8' aufweist, welche der konischen Ringfläche 8 an der feststehenden Leitung 2 der vorbeschriebenen axialen Anordnung entsprechen. Radiale Bohrungen 32 in der Leitung 1 münden in den Druckraum 15, der über mindestens eine radiale Bohrung 33 im Führungsring 31 mit einer Querbohrung 34 im Gehäuse 30 über einen Ringkanal 35 in Strömungsverbindung steht, womit die axiale Strömungsrichtung in eine radiale Richtung ändert.

Beidseitig des Führungsringes 31 an dessen konischen Ringflächen 8' stützen sich je eine Rotationshülse 3 mit sphärischer Mantelfläche ab (wie vorbeschrieben), welche je an der Gegenseite mit einer Druckhülse 10 zusammenwirken, die sich drehfest und dichtend auf der wellenförmigen Leitung 1 befinden und sich an Gegenschultern 37 der Leitung 1 abstützen (wie vorbeschrieben).

Die wellenförmige Leitung 1 ist an ihrem inneren Ende abgesetzt, wobei ein Wellendichtring 19 den Leckraum dort abschliesst, wogegen der Druckraum 15 über Dichtungsmittel 21, 21' an der Hohlwelle 1 abgeschlossen ist.

Die erfindungsgemässen Rotationshülsen 3 erlauben nun eine Hohlwelle 1, die neben einem genügend grossen hydraulischen Querschnitt (Nennweite) auch noch einen genügend grossen Materialquerschnitt aufweist, was gestattet, auch grösste axiale Zugkräfte, die durch die Druckbeaufschlagung des gesamten Dichtkreisquerschnittes entstehen, aufzunehmen. Zudem ist eine solche wellenförmige Leitung 1 geeignet, weitere Uebertragungsfunktionen zu übernehmen.

Somit vereinigt diese erfindungsgemässe Drehdurchführung sämtliche Vorteile der axialen Drehdurchführungen, nämlich sehr geringe Leckraten, grosser hydraulischer Querschnitt, kleines Widerstandsdrehmoment und gute Notlaufeigenschaften, mit den Vorteilen der radialen Drehdurchführungen, nämlich keine Axialkräfte zwischen den zueinander drehbar gelagerten Teilen, sowie eine durchgehende Hohlwelle, welche weitere Uebertragungsfunktionen erlaubt.

Ein wesentlicher Vorteil der erfindungsgemässen Massnahmen ist zudem, dass die druckdichte Verbindungsvorrichtung sowohl als Drehdurchführung als auch als Hochdruck-Wellendichtung verwendbar ist.

## Patentansprüche

1. Druckdichte Verbindungsvorrichtung mit zwei, ein Druckmedium führenden, relativ zueinander drehenden Leitungen und mindestens einem Rotationskörper, der sich zwischen den Leitungen befindet und der über sphärische Flächenbereiche und tangential berührende Gegenflächen mit den Leitungen in drehendem und dichtendem Reibungskontakt steht, dadurch gekennzeichnet, dass der Rotationskörper eine Hülse (3) mit sphärischer, vorzugsweise äquatorialer kugelzonenförmiger Mantelfläche (4) ist und sich mit dieser Mantelfläche zwischen tangential berührenden konischen Ringflächen (7 resp.8) an den Leitungen (1;2) abstützt, wobei mindestens ein, an der Hülse (3) wirksamer Gleitnocken (9) die Hülse (3) in Schräglage zwingt.

2. Verbindungsvorrichtung nach Anspruch 1, dadurch gekennzeichnet, dass die konischen Ringflächen (7;8) an den Leitungen (1;2) durch Innenschultern (5;6) axial begrenzt sind, an welcher einen Innenschulter (5;6) sich der Gleitnocken (9) befindet, der die Hülse (3) bis zum Anschlag an die andere Innenschulter (6;5) in die Schräglage zwingt.

3. Verbindungsvorrichtung nach Anspruch 1, dadurch gekennzeichnet, dass der Gleitnocken (9') an einem äquatorialen Gleitring (6') an der Hülse (3') wirksam ist und die Hülse (3') bis zum stirnseitigen Anschlag des Gleitringes (6') in eine Schräglage zwingt.

4. Verbindungsvorrichtung nach Anspruch 1, dadurch gekennzeichnet, dass die eine, die Rotationshülse (3) abstützende konische Ringfläche (8) stirnseitig an der feststehenden Leitung (2) ausgebildet ist und sich die andere konische Ringfläche (7) am freien Ende einer, auf der wellenförmigen Leitung (1) axial gegen die Wirkung einer Feder (11) verschiebbar, drehfest und dichtend aufsitzenden Druckhülse (10) befindet.

5. Verbindungsvorrichtung nach Anspruch 4, dadurch gekennzeichnet, dass sich der Gleitnocken (9) an der Innenschulter (5) der Druckhülse (10) befindet.

6. Verbindungsvorrichtung nach Anspruch 4, dadurch gekennzeichnet, dass der Gleitdurchmesser zwischen Druckhülse (10) und Leitung (1) im wesentlichen gleich ist dem Berührungskreis zwischen konischen Ringflächen (7 resp. 8) und sphärischer Mantelfläche (4) der Rotationshülse (3).

7. Verbindungsvorrichtung nach Anspruch 1, dadurch gekennzeichnet, dass die drehende Leitung (1) axial über ein Wälzlager (20) oder über ein hydrostatisches Axiallager (21) abgestützt ist.

8. Verbindungsvorrichtung nach Anspruch 1, dadurch gekennzeichnet, dass in koaxialer Zwillingsanordnung für einen radialen Durchlass des Mediums die drehende wellenförmige Leitung (1) einen Druckraum (15) durchdringt, in dem ein symmetrischer, die drehfeste Leitung bildender, stirnseitig konische Ringflächen (8') aufweisender Führungsring (31) die drehende Leitung (1) umgibt, an dessen Ringflächen (8') sich je eine Rotationshülse (3) mit sphärischer Mantelfläche abstützt, die je an der Gegenseite mit einer Druckhülse (10) zusammenwirken, wobei radiale Bohrungen (32) in der Leitung (1) in den Druckraum (15) münden, der über eine radiale Bohrung (33) im Führungsring (31) mit einer Querbohrung (34) im Gehäuse (30) in Ströungsverbindung steht.

## Claims

1. A pressure tight connecting device for two pipes conveying a fluid under pressure, the two conduits rotating relative towards one another, between which at least one rotation body is situated which is in rotating and sealing frictional contact with the conduits through spherical surface areas and tangentially contacting countersurfaces, characterized in that the rotation body is a sleeve (3) with a spherical, preferably equatorial sphere zone-like superficies (4) and rests with this superficies on the conduits (1;2) between tangentially contacting conical ring sur-faces (7 resp. 8), whereby at least one slide cam (9) acting on the sleeve forces the sleeve into an inclined position.

2. A connecting device as defined in claim 1, characterized in that the conical ring surfaces (7;8) on the conduits (1;2) are axially limited by inner shoulders (5;6), with a slide cam (9) being situated on the one inner shoulder (6;5), which slide cam forces the sleeve into the inclined position up to the stop on the other inner shoulder.

3. A connecting device as defined in claim 1, characterized in that the slide cam (9') acts on an equatorial slide ring (6') on the sleeve (3') and forces the sleeve into an inclined position up to the stop of the front side of the slide ring.

4. A connecting device as defined in claim 1, characterized in that the conical ring surface (8) supporting the rotation sleeve (3) is formed on the front side on the fixed conduit (2) and that the other conical ring surface (7) is provided at the free end of a rotationally rigid and sealingly placed pressure sleeve (10) which is axially displaceable on the shaft-like conduit (1) against the force of a spring (11).

5. A connecting device as defined in claim 4, characterized in that the slide cam (9) is provided on the inner shoulder (5) of the pressure sleeve (10).

6. A connecting device as defined in claim 4, characterized in that the slide diameter between the pressure sleeve (10) and the conduit (1) is substantially equivalent to the circle of contact between conical ring surface (7 resp. 8) and spherical superficies of rotation sleeve (3).

7. A connecting device as defined in claim 1, characterized in that the rotating conduit (1) is axially supported through a rotary bearing (20) or through a hydrostatic axial bearing (21).

8. A connecting device as defined in claim 1, characterized in that in a coaxial twin arrangement for a radial passage of the medium the rotating shaft-like conduit (1) penetrates a pressure chamber (15) in which a symmetrical guide ring (31), which forms the rotationally rigid conduit and is provided with conical ring surfaces (8') on the front side, encompasses the rotating conduit (1), on each of whose ring surfaces rests a rotation sleeve (3) with spherical superficies which each cooperate on the opposite side with a pressure sleeve (10), with radial bores (32) in the conduit opening out into the pressure chamber (15) which is in flow connection with a transversal bore (34) in the casing (30) via a radial bore (33) in the guide ring (31).

## Revendications

1. Dispositif d'accouplement étanche à la pression comprenant deux conduites guidant un fluide sous pression et tournant l'une par rapport à l'autre et au moins un corps de rotation qui se trouve entre les conduites et est en contact par friction de manière rotative et étanche par l'intermédiaire de zones sphériques de surface et par le biais de contre-surfaces tangentiellement en contact, caractérisé en ce que le corps de rotation est une douille (3) pourvue d'une surface d'enveloppe sphérique (4), de préférence en forme de zones de sphère équatoriale et prend appui, par cette surface d'enveloppe, sur les conduites (1 ; 2) entre des surfaces annulaires coniques (7 respectivement 8) se touchant tangentiellement, au moins une came de glissement (9), qui agit sur la douille (3), forçant la douille (3) à prendre une position inclinée.

2. Dispositif d'accouplement selon la revendication 1, caractérisé en ce que les surfaces annulaires coniques (7 ; 8), sont délimitées axialement sur les conduites (1 ; 2), par des épaulements internes (5 ; 6), sur l'un des épaulements internes (5 ; 6) se trouve la came de glissement (9) qui force la douille (3) à prendre la position inclinée jusqu'à ce qu'elle vienne en butée contre l'autre épaulement interne (6 ; 5).

3. Dispositif d'accouplement selon la revendication 1, caractérisé en ce que la came de glissement (9'), agit sur un anneau de glissement équatorial (6'), sur la douille (3') et force la douille (3') à prendre une position inclinée pour venir en butée contre la face avant de l'anneau de glissement (6').

4. Dispositif d'accouplement selon la revendication 1, caractérisé en ce que la surface annulaire conique (8), servant d'appui à la douille de rotation (3), est pratiquée, en face avant, sur la conduite fixe (2) et l'autre surface annulaire conique (7) se trouve à l'extrémité libre d'une douille de pression (10) reposant de manière étanche et rigide à la torsion sur la conduite ondulée (1) et pouvant coulisser axialement à l'encontre de l'action d'un ressort (11).

5. Dispositif d'accouplement selon la revendication 4, caractérisé en ce que la came de glissement (9) se trouve sur l'épaulement interne (5) de la douille de pression (10).

6. Dispositif d'accouplement selon la revendication 4, caractérisé en ce que le diamètre de glissement entre la douille de pression (10) et la conduite (1) est sensiblement identique au cercle de contact entre les surfaces annulaires coniques (7 respectivement 8) et la surface d'enveloppe sphérique (4) de la douille de rotation (3).

7. Dispositif d'accouplement selon la revendication 1, caractérisé en ce que la conduite tournante (1) prend appui axialement par l'intermédiaire d'un palier à roulement (20) ou par l'intermédiaire d'un palier de butée hydrostatique (21).

8. Dispositif d'accouplement selon la revendication 1, caractérisé en ce que, dans une disposition coaxiale double prévue pour un passage radial du fluide, la conduite ondulée tournante (1) traverse un espace de pression (15) dans lequel la conduite tournante (1) est entourée par un anneau symétrique de guidage (31) qui présente des surfaces annulaires (8'), coniques en face avant et formant la conduite fixe, et contre chaque surface annulaire (8') duquel prend appui une douille de rotation (3) avec une surface d'enveloppe sphérique qui coopère à chaque fois sur la face opposée avec une douille de pression (10), des perçages radiaux (32), ménagés dans la conduite (1), débouchant dans l'espace de pression (15) qui est relié en écoulement, par l'intermédiaire d'un perçage radial (33) situé dans l'anneau de guidage (31), à un perçage transversal (34) se trouvant dans le carter (30).
